# FASCICULE DE BREVET EUROPEEN

(11) **EP 1 214 685 B1**
(45) Date de publication et mention de la délivrance du brevet: **10.12.2003**
(21) Numéro de dépôt: 00958720.5
(22) Date de dépôt: 22.08.2000
(51) Int. Cl.: G06K 19/077

(54) **CARTE A MODULE SECABLE RESISTANTE AUX CONTRAINTES EN FLEXION**
BIEGESTEIFTE KARTE MIT TRENNBAREM MODUL
DIVISIBLE MODULE CARD WHICH IS RESISTANT TO BENDING STRESSES

(30) Priorité: 24.08.1999 FR 9910746
(43) Date de publication de la demande: 19.06.2002
(73) Titulaire: SCHLUMBERGER Systèmes, 92120 Montrouge (FR)
(72) Inventeur: LAVRUT, Eric, F-45000 Orleans (FR); GIROT, Franck, F-92400 Courbevoie (FR)
(74) Mandataire: den Braber, Gerard Paul
(86) Numéro de dépôt international: FR0002355
(87) Numéro de publication internationale: WO01015077

(56) Documents cités:
- EP-A- 0 521 778
- EP-A- 0 535 436
- DE-C- 19 726 203

## Description

La présente invention concerne des cartes comportant un corps de carte plastique et un module sécable retenu audit corps de carte par trois attaches, ce module sécable comprenant, d'une part, un corps de module plastique sensiblement parallélépipédique et rectangle de faible épaisseur dont un bord en angle est coupé de manière à former un moyen de détrompage et, d'autre part, un micro-contrôleur électriquement connecté à des plages de contact affleurantes à la surface dudit module.

De telles cartes, bien souvent appelées cartes SIM pour Subscriber Identification Module (en français, module d'identification abonné), sont destinées notamment au domaine de la téléphonie mobile où des opérateurs de réseaux de télécommunications exigent que l'accès aux services qu'ils proposent ne soit permis que de manière sécurisée. En pratique, lorsqu'une personne du public souhaite accéder à un réseau de télécommunications, elle acquiert au préalable une carte SIM. Cette personne est alors dite abonnée au réseau et dispose par exemple de droits d'accès dont la gestion est assurée en partie par la carte.

Une fois que la personne a acquis une carte SIM, elle connecte cette carte à son téléphone mobile. Certains téléphones mobiles acceptent uniquement des cartes au format dit ISO, c'est-à-dire dont les dimensions, de l'ordre de 85,6 mm de longueur, de 54 mm de largeur et de 0,76 mm d'épaisseur, sont prévues dans la norme IS07816. D'autres téléphones mobiles acceptent cependant uniquement des cartes SIM au format mini-carte, c'est-à-dire dont les dimensions, de l'ordre de 25 mm de longueur, de 15 mm de largeur et de 0,76 mm d'épaisseur, sont prévues dans la norme ETSI/GSM11.11. Aussi, selon le modèle de téléphone mobile dont dispose les personnes abonnées, celles-ci sont conduites à détacher le module sécable du corps de carte en vue de l'insérer dans leur téléphone ou non.

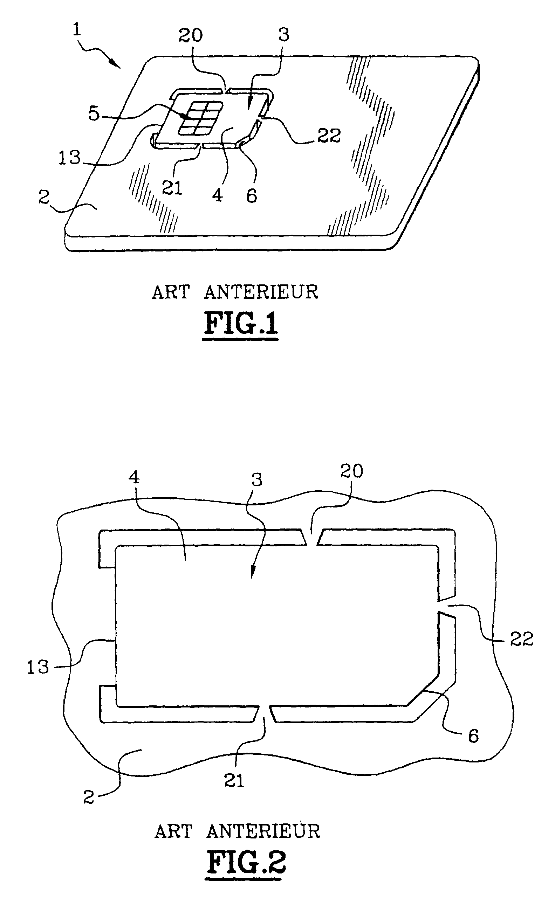

Dans l'art antérieur présenté aux figures 1 et 2, le module 3 est intégré au corps 2 de carte de manière que les plages 5 de contact affleurantes à la surface dudit module 3 soient situées aux positions définies dans la norme précitée ISO7816. Les moyens destinés à retenir le module 3 au corps 2 de carte sont constitués par quatre attaches. Une grande attache 13 relie le bord de largeur opposé au bord en angle coupé 6 formant moyen de détrompage, c'est-à-dire, sur les figures précitées, le bord gauche du module 3, au corps 2 de carte et trois attaches de largeur réduite 20, 21 et 22 relient respectivement le bord du haut, le bord du bas et le bord droit du module 3, audit corps 2 de carte. Ces trois dernières attaches montrent une section longitudinale fortement trapézoïdale.

Pour détacher le module 3 d'une carte, la personne doit exercer une pression sur le module afin de rompre les attaches de taille réduites 20, 21, 22 puis plier à une ou plusieurs reprises la grande attache 13 pour finalement rompre cette dernière. La séparation du module 3 est irréversible.

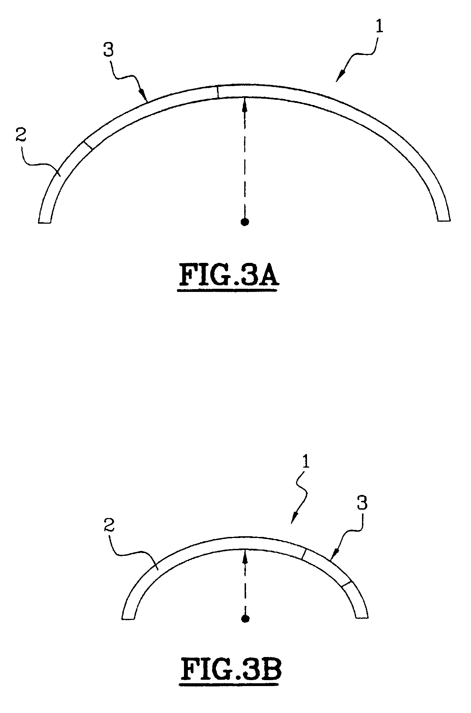

Les cartes à module sécable décrites ci-dessus de l'état de la technique ne présentent pas une résistance mécanique suffisante aux flexions et torsions dynamiques pour qu'elles soient compatibles avec les normes ISO7816-1/ISO10373 qui exigent que les cartes au format ISO doivent résister à 500 flexions dans le sens de la longueur avec une flèche de 20 mm (figure 3A) puis à 500 flexions dans le sens de la largeur avec une flèche de 10 mm (figure 3B). En effet, lorsque de telles cartes sont soumises aux 500 flexions dynamiques dans le sens de la longueur, un allongement maximal de l'ordre de 100 % est subi par l'attache 22 et, lorsque ces cartes sont soumises aux 500 flexions dynamiques dans le sens de la largeur, un allongement maximal de l'ordre de 181 % est subi par l'attache 21. Un allongement maximal de 100 % pour une attache donnée, signifie qu'un élément de cette attache subit un allongement maximal théorique consistant en un doublement de sa longueur. En pratique, l'attache casse avant d'atteindre les 500 flexions.

En outre, malgré leur résistance insuffisante aux flexions et torsions, les modules sécables des cartes de l'état de la technique ne sont pas pour autant tous plus faciles à détacher du corps de carte compte tenu de la présence des quatre attaches.

Citons aussi la demande de brevet EP 0 521 778 A1 qui concerne la fabrication de cartes à puces. Pour réduire le coût de fabrication des cartes à puces de format plus petit que le format habituel, toutes les étapes de fabrication y compris le test et la personnalisation imprimée des surfaces visibles de la carte sont faites sur une carte de format standard. En fin de processus une carte de format réduit est découpée dans la carte standard. Une prédécoupe partielle est effectuée le long d'une ligne, soit par amincissement de la carte sur tout le pourtour de la carte de format réduit, soit par une fente suivant ce pourtour, cette fente étant interrompue localement pour laisser subsister des ponts de maintien provisoire entre la carte de format réduit et le reste de la carte standard.

Le brevet DE 0 535 436 A2 concerne une carte à puce comprenant un module détachable. Ce module est lié au corps de carte au moyen d'attaches et d'au moins un élément de fixation. Lorsque les attaches sont brisées, le module garde la même position dans son logement grâce à l'élément de fixation.

Le brevet DE 197 26 203 C1 concerne une carte à puce comprenant un corps de carte dans lequel se trouve un module sensiblement rectangulaire et détachable de façon irréversible. La limite entre le corps de carte et le module est découpée sur quasiment tout le pourtour. La partie du contour qui n'est pas découpée est une ligne que l'on entaille légèrement. En face de cette zone linéaire entaillée à été pratiquée une encoche triangulaire.

Aussi, un problème que se propose de résoudre l'invention a trait à la réalisation de cartes comportant un corps de carte plastique et un module sécable retenu audit corps de carte par trois attaches, ce module sécable comprenant, d'une part, un corps de module plastique sensiblement parallélépipédique et rectangle de faible épaisseur dont un bord en angle est coupé de manière à former un moyen de détrompage et, d'autre part, un micro-contrôleur électriquement connecté à des plages de contact affleurantes à la surface dudit module, lesdites cartes présentant une plus grande résistance aux contraintes en flexion et en torsion que les cartes similaires de l'état de la technique.

La solution proposée de l'invention au problème posé précité a pour objet une carte caractérisée en ce qu'une première attache relie le bord coupé de détrompage du module au corps de carte.

L'invention sera mieux comprise à la lecture de l'exposé non limitatif qui suit, rédigé au regard des dessins annexés, dans lesquels :
la figure 1 montre, en perspective, une carte selon l'art antérieur ;
la figure 2 détaille, en vue dessus, un module sécable d'une carte selon l'art antérieur ;
les figures 3A et 3B schématisent, en coupe, les tests en flexion prévus par la norme ISO7816-1/ISO10373 ; et
les figures 4, 5 et 6, détaillent, en vue de dessus, trois modes de réalisation d'un module sécable d'une carte selon l'invention.

Les cartes 1 selon l'invention comportent un corps 2 de carte et un module 3.

Le corps 2 d'une carte selon l'invention est conforme au corps 2 des cartes selon l'art antérieur, tel que présenté à la figure 1. Il forme donc sensiblement un parallélépipéde rectangle de faible épaisseur dont les dimensions, définies dans la norme ISO7816 sont de l'ordre de 85,6 mm de longueur, 54 mm de largeur et de 0,76 mm d'épaisseur. Il est plastique, notamment thermoplastique par exemple formé d'un polychlorure de vinyle (PVC), d'un acrylonitrile butadiène styrène (ABS) d'un polyéthylène téréphtalate (PET) d'un polycarbonate (PC) ou d'un mélange de ces thermoplastiques. Sa structure est généralement multicouches les différentes couches étant soudés ou collées entre elles au cours de procédés de fabrication connus des cartes intégrant notamment des étapes de colaminage à chaud.

Le module 3 est sécable. Il comprend, d'une part, un corps 4 de module et, d'autre part, un micro-contrôleur électriquement connecté à des plages 5 de contact affleurantes à la surface dudit module 3.

Les caractéristiques du corps 4 de module sont définies notamment dans la norme ETSI/GSM11.11. Il se présente sensiblement sous la forme d'un parallélépipéde rectangle de faible épaisseur dont les dimensions sont de l'ordre de 25 mm de longueur, 15 mm de largeur et de 0,76 mm d'épaisseur, soit la même épaisseur que l'épaisseur du corps 2 de carte. Un bord en angle du module est coupé à 45° de manière à former un moyen de détrompage de son positionnement dans le sens recto-verso pour sa connexion aux bornes d'un connecteur d'un terminal prévu à cet effet. Ce bord est désigné, dans la suite du présent exposé, par bord coupé 6. Le bord de largeur du module 3, directement en continuité avec le bord coupé 6, est le bord droit 7 du module 3. Le bord de largeur du module 3, opposé au bord coupé 6, est le bord gauche 8 du module 3. Le bord de longueur du module 3, directement en continuité avec le bord coupé 6, est le bord du bas 9 du module 3. Le bord de longueur du module 3, opposé au bord coupé 6, est le bord du haut 10 du module 3.

Le corps 4 de module est, de même que le corps 2 de carte, plastique, notamment thermoplastique par exemple formé d'un PVC, d'un ABS, d'un PET, d'un PC ou d'un mélange de ces thermoplastiques. Sa structure est généralement multicouche, les différentes couches étant soudés ou collées entre elles au cours de procédés de fabrication connus des cartes. En pratique, le corps 4 de module est identique, au point de vue de son épaisseur et des matières chimiques qui le composent, au corps 2 de carte. Cela résulte du fait que, pour la fabrication de la carte selon l'invention, on fabrique une carte classique et puis on effectue une découpe 11 qui désolidarise partiellement le module 3 du corps 2 de carte. Cette découpe 11 a une largeur constante, de l'ordre de 1 mm. Elle est obtenue au moyen d'outils de découpage.

Selon l'invention, le module 3 est retenu au corps 2 de carte au moyen de trois attaches et, avantageusement, au moyen de trois attaches uniquement. Il s'agit d'une première attache 12 reliant le bord coupé 6 du module 3 au corps 2 de carte, d'une seconde attache 13 reliant le bord gauche 8 du module 3 au corps 2 de carte et d'une troisième attache 14 reliant le bord du haut 10 du module 3 audit corps de carte.

La seconde attache 13 relie le bord gauche 8 du module 3, sur la quasi-totalité dudit bord 8. En pratique, cette attache 13 est centrée le long du bord 8 et a une longueur comprise entre 10 et 11 mm. Elle présente, sur la face de dessus de la carte montrant les plages de contact, une incision 15 qui facilite la rupture de ladite attache 13 lorsqu'on veut détacher le module 3.

Les première 12 et troisième 14 attaches sont des attaches dont la largeur est réduite. En pratique, leur largeur est de l'ordre du millimètre. Leur section dans le sens longitudinal est par exemple trapézoïdale ou constante, rectangulaire.

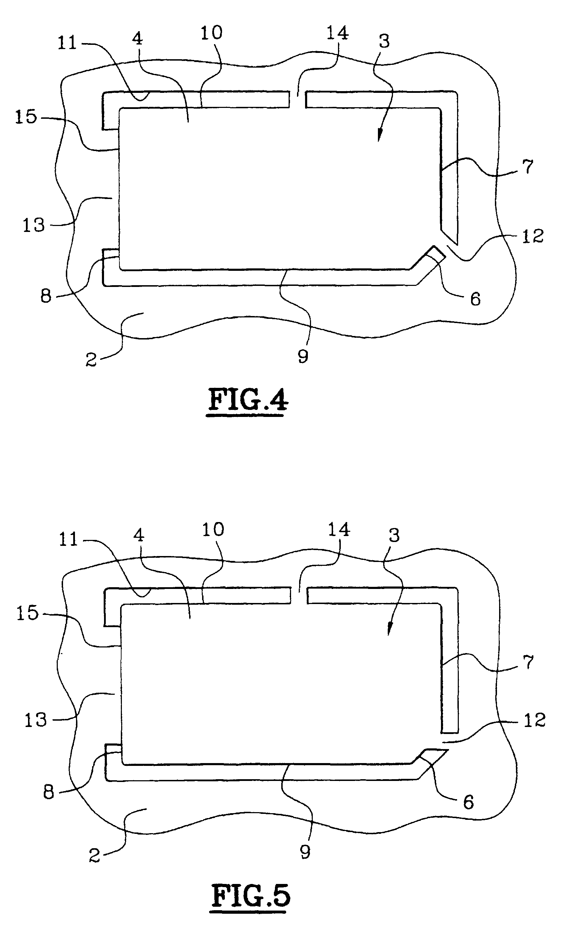

Dans le mode de réalisation de l'invention présenté à la figure 4, les attaches ont les caractéristiques suivantes.

La première attache 12 relie la partie haute du bord coupé 6 au corps 2 de carte. Elle est perpendiculaire audit bord 6. Sa largeur est de l'ordre du millimètre et sa section longitudinale est rectangulaire constante ou légèrement trapézoïdale.

La seconde attache 13 est sensiblement centrée le long du bord 8 et a une longueur d'environ 12 mm. Elle présente une incision 15.

La troisième attache 14 est sensiblement centrée le long du bord du haut 10. Elle est perpendiculaire audit bord 10. Sa largeur est de l'ordre du millimètre et sa section longitudinale est rectangulaire constante ou légèrement trapézoïdale.

Muni de telles attaches, le module 3 du mode de réalisation précité montre, lorsqu'il est soumis à 500 flexions dynamiques dans le sens de la longueur (figure 3A), un allongement maximal de l'ordre de l'ordre de 15 % sur la première attache 12 et, lorsqu'il est soumis à 500 flexions dynamiques dans le sens de la largeur (figure 3B), un allongement maximal de l'ordre de 21 % sur la troisième attache 14. Ces allongements maxima ne sont pas suffisants pour être à l'origine d'une rupture des attaches thermoplastiques concernées. Une carte dont le module est muni des attaches selon ce mode de réalisation résiste donc aux 500 flexions dynamiques dans le sens de la longueur et dans le sens de la largeur exigées par la norme ISO7816-1/DIN10373.

On notera que, dans le cas où, par rapport au mode de réalisation de la figure 4, la première attache 12 ne relie pas le bord coupé 6 au corps 2 de carte, mais le bord droit 7 audit corps 2, l'allongement maximal, qui était de l'ordre de 15 % sur cette première attache 12 atteint la valeur de 33 %.

Dans le mode de réalisation de l'invention présenté à la figure 5, les attaches 12, 13, 14 ont les mêmes caractéristiques que les attaches 12, 13, 14 du mode de réalisation de la figure 4, à l'exception de la première attache 12 qui présente cette fois une direction parallèle aux bords du bas 9 et du haut 10 du module 3.

Dans ce mode de réalisation, la carte 1 montre, lorsqu'elle est soumise à 500 flexions dynamiques dans le sens de la longueur, un allongement maximal de l'ordre de l'ordre de 20 % sur la première attache 12 et, lorsqu'elle est soumise à 500 flexions dynamiques dans le sens de la largeur, un allongement maximal de l'ordre de 22 % sur la troisième attache 14. De même que précédemment, ces allongements maxima ne sont pas suffisants pour être à l'origine d'une rupture des attaches 12, 14 concernées. Une carte 1 selon l'invention, dont le module est muni des attaches décrites ci-dessus, résiste donc aux 500 flexions dynamiques dans le sens de la longueur et dans le sens de la largeur exigées par la norme ISO7816-1/ISO10373.

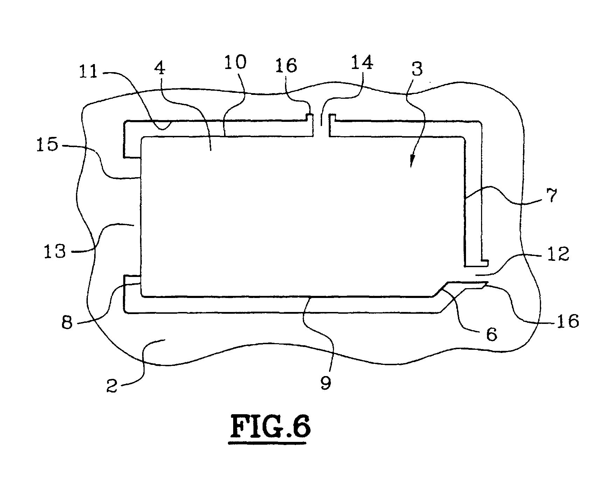

Dans le mode de réalisation de l'invention présenté à la figure 6, les attaches 12, 13, 14 ont les mêmes caractéristiques que les attaches 12, 13, 14 du mode de réalisation de la figure 5, à l'exception du fait que les première 12 et troisième 14 attaches sont allongées vers le corps 2 de carte, étant donné que ledit corps 2 présente, à l'endroit desdites attaches 12, 14 une encoche 16 dont la profondeur est de l'ordre de 1 mm.

Dans ce mode de réalisation, la carte 1 montre, lorsqu'elle est soumise à 500 flexions dynamiques dans le sens de la longueur, un allongement maximal de l'ordre de l'ordre de 16 % sur la première attache 12 et, lorsqu'elle est soumise à 500 flexions dynamiques dans le sens de la largeur, un allongement maximal de l'ordre de 15 % sur la troisième attache 14. Ces allongements maxima ne sont pas suffisants pour être à l'origine d'une rupture des attaches 12, 14 concernées. Une carte 1 selon l'invention, dont le module 3 est muni des attaches 12, 14 précitées résiste donc aux 500 flexions dynamiques dans le sens de la longueur et dans le sens de la largeur exigées par la norme ISO7816-1/ISO10373.

On notera que, dans le cas où les attaches sont allongées vers le module 3, c'est-à-dire dans le cas où c'est le module 3 qui montre des encoches du type des encoches 16, la valeur précitée de 15 % devient 71 %, ce qui est considérable.

En définitive, par rapport à l'état de la technique, le fait d'avoir une première attache 12 directement reliée au bord coupé 6 améliore considérablement la résistance de la carte aux flexions dynamiques. En outre, la présence de cette attache limite le baillement du module 3 par rapport au corps 2 de carte lors des flexions dans le sens de la longueur, baillements qui auraient pu conduire à une déformation relative du module 3 par rapport au corps 2 de carte et empêcher l'introduction et le retrait corrects de la carte 1 dans des terminaux de lecture de cartes au format ISO.

## Revendications

1. Carte (1) comportant un corps (2) de carte plastique et un module (3) sécable retenu audit corps (2) de carte par une première (13) et une deuxième attache latérale (14), ce module (3) sécable comprenant, d'une part, un corps (4) de module plastique sensiblement parallélépipédique et rectangle de faible épaisseur dont un bord (6) en angle est coupé de manière à former un moyen de détrompage et, d'autre part, un micro-controleur électriquement connecté à des plages (5) de contact affleurantes à la surface dudit module (3), **caractérisée en ce que** le module (3) sécable est retenu en outre audit corps (2) de carte par une attache angulaire (12), ladite attache angulaire (12) reliant le bord coupé (6) de détrompage du module (3) au corps (2) de carte.

2. Carte (1) selon la revendication 1, **caractérisée en ce que** le module (3) sécable est retenu au corps de carte par trois attaches (12, 13, 14) uniquement.

3. Carte (1) selon la revendication 1, **caractérisée en ce que** la première attache latérale (13) relie le bord (8) de largeur du module (3) opposé au bord coupé (6) au corps (2) de carte sur la quasi totalité dudit bord (8) .

4. Carte (1) selon la revendication 1, **caractérisée en ce que** la deuxième attache latérale (14) relie le bord (10) de longueur du module (3) opposé au bord coupé (6) au corps (2) de carte.

5. Carte (1) selon la revendication 4, **caractérisée en ce que** la deuxième attache latérale est sensiblement centrée le long du bord (10).

6. Carte (1) selon la revendication 1, **caractérisée en ce que** l'attache angulaire relie la partie haute du bord coupé (6) au corps (2) de carte.

7. Carte (1) selon la revendication 1, **caractérisée en ce que** l'attache angulaire (12) est perpendiculaire au bord (6).

8. Carte (1) selon la revendication 1, **caractérisée en ce que** l'attache angulaire (12) et la deuxième attache latérale (14) sont des attaches de largeur réduite de l'ordre du millimètre dont la section longitudinale est constante, rectangulaire.

9. Carte (1) selon la revendication 1, **caractérisée en ce que** l'attache angulaire (12) et la deuxième attache latérale (14) sont allongées vers le corps (2) de carte.

10. Carte (1) selon la revendication 1, **caractérisée en ce que** la première attache latérale (13) relie le bord (8) de largeur du module (3) opposé au bord coupé (6) de détrompage au corps (2) de carte et **en ce que** la deuxième attache latérale (14) relie le bord (10) de longueur du module (3) opposé au bord coupé (6) au corps (2) de carte.

## Patentansprüche

1. Karte (1) mit einem Kartenkörper (2) aus Kunststoff und einem teilbaren Modul (3), das am besagten Kartenkörper (2) durch eine erste (13) und eine zweite (14) seitliche Befestigung gehalten wird, wobei dieses teilbare Modul (3) einerseits einen Modulkörper (4) aus Kunststoff umfasst, der im wesentlichen parallelepipedförmig, rechteckig und von geringer Stärke ist, dessen eine Eckkante (6) so zugeschnitten ist, dass sie eine Unverwechselbarkeitsvorrichtung bildet, und andererseits einen Mikrosteuerbaustein, der mit in die Oberfläche des besagten Moduls (3) versenkten Kontaktflächen (5) elektrisch verbunden ist, **dadurch gekennzeichnet, dass** das teilbare Modul (3) zudem über eine Eckbefestigung (12) am besagten Kartenkörper (2) gehalten wird, wobei die Eckbefestigung (12) die zugeschnittene Unverwechselbarkeitskante (6) des Moduls (3) mit dem Kartenkörper (2) verbindet.

2. Karte (1) nach Anspruch 1, **dadurch gekennzeichnet, dass** das teilbare Modul (3) nur mit drei Befestigungen (12, 13, 14) am Kartenkörper gehalten wird.

3. Karte (1) nach Anspruch 1, **dadurch gekennzeichnet, dass** die erste seitliche Befestigung (13) die der zugeschnittenen Kante (6) gegenüberliegende Kante (8) der Breitenseite des Moduls (3) praktisch auf der gesamten Länge dieser Kante (8) mit dem Kartenkörper (2) verbindet.

4. Karte (1) nach Anspruch 1, **dadurch gekennzeichnet, dass** die zweite seitliche Befestigung (14) die der zugeschnittenen Kante (6) gegenüberliegende Kante (10) der Längsseite des Moduls (3) mit dem Kartenkörper (2) verbindet.

5. Karte (1) nach Anspruch 4, **dadurch gekennzeichnet, dass** die zweite seitliche Befestigung im wesentlichen mittig in Bezug auf die Länge der Kante (10) angeordnet ist.

6. Karte (1) nach Anspruch 1, **dadurch gekennzeichnet, dass** die Eckbefestigung den oberen Bereich der zugeschnittenen Kante (6) mit dem Kartenkörper (2) verbindet.

7. Karte (1) nach Anspruch 1, **dadurch gekennzeichnet, dass** die Eckbefestigung (12) senkrecht zur Kante (6) ist.

8. Karte (1) nach Anspruch 1, **dadurch gekennzeichnet, dass** die Eckbefestigung (12) und die zweite seitliche Befestigung (14) Befestigungen von geringer Breite in der Größenordnung des Millimeters sind, deren Längsschnitt gleichmäßig rechtwinklig ist.

9. Karte (1) nach Anspruch 1, **dadurch gekennzeichnet, dass** sich die Eckbefestigung (12) und die zweite seitliche Befestigung (14) zum Kartenkörper (2) hin erstrecken.

10. Karte (1) nach Anspruch 1, **dadurch gekennzeichnet, dass** die erste seitliche Befestigung (13) die der zugeschnittenen Unverwechselbarkeitskante (6) gegenüberliegende Kante (8) der Breitenseite des Moduls (3) mit dem Kartenkörper (2) verbindet und dass die zweite seitliche Befestigung (14) die der zugeschnittenen Kante (6) gegenüberliegende Kante (10) der Längsseite des Moduls (3) mit dem Kartenkörper (2) verbindet.

## Claims

1. Card (1) comprising a plastic card body (2) and a snap-off module (3) held to the said card body (2) by a first (13) and a second (14) lateral tie, this snap-off module (3) comprising, firstly, a substantially parallelepiped rectangular thin plastic body (4) of which one edge (6) in the comer is cut so as to form a means of foolproofing and, secondly, a microcontroller electrically connected to contact pads (5) flush with the surface of the said module (3), **characterised in that** the snap-off module (3) is in addition held to the said card body (2) by an angular tie (12), the said angular tie (12) connecting the cut foolproofing edge (6) of the module (3) to the card body (2).

2. Card (1) according to claim 1, **characterised in that** the snap-off module (3) is held to the card body only by three ties (12, 13, 14).

3. Card (1) according to claim 1, **characterised in that** the first lateral tie (13) connects the width edge (8) of the module (3) opposite the cut edge (6) to the card body (2) along almost all of the said edge (8).

4. Card (1) according to claim 1, **characterised in that** the second lateral tie (14) connects the length edge (10) of the module (3) opposite the cut edge (6) to the card body (2).

5. Card (1) according to claim 4, **characterised in that** the second lateral tie is substantially centred along edge (10).

6. Card (1) according to claim 1, **characterised in that** the angular tie connects the top part of the cut edge (6) to the card body (2).

7. Card (1) according to claim 1, **characterised in that** the angular tie (12) is perpendicular to the edge (6).

8. Card (1) according to claim 1, **characterised in that** the angular tie (12) and second lateral tie (14) are ties of reduced width measuring approximately one millimetre whose longitudinal cross section is constant, rectangular.

9. Card (1) according to claim 1, **characterised in that** the angular tie (12) and the second lateral tie (14) are extended towards the card body (2).

10. Card (1) according to claim 1, **characterised in that** the first lateral tie (13) connects the width edge (8) of the module (3) opposite the cut foolproofing edge (6) to the card body (2) and **in that** the second lateral tie (14) connects the length edge (10) of the module (3) opposite the cut edge (6) to the card body (2).
